# EUROPÄISCHE PATENTSCHRIFT

(11) **EP 1 323 125 B1**
(45) Veröffentlichungstag und Bekanntmachung des Hinweises auf die Patenterteilung: **15.11.2006**
(21) Anmeldenummer: 01983489.4
(22) Anmeldetag: 20.09.2001
(51) Int. Cl.: G06K 19/06, B42D 15/00

(54) **SICHERHEITSSIEGEL UND VERFAHREN ZU DESSEN HERSTELLUNG**
SECURITY SEAL AND METHOD FOR THE PRODUCTION THEREOF
CACHET DE SECURITE ET SON PROCEDE DE PRODUCTION

(30) Priorität: 21.09.2000 DE 10046950
(43) Veröffentlichungstag der Anmeldung: 02.07.2003
(73) Patentinhaber: Xetos AG, 82064 Strasslach (DE)
(72) Erfinder: KNOCKE, Frank, 85560 Ebersberg (DE); DE JONGH, Rudi, 83026 Rosenheim (DE)
(74) Vertreter: Jacoby, Georg
(86) Internationale Anmeldenummer: PCT/EP2001/010914
(87) Internationale Veröffentlichungsnummer: WO 2002/025579

(56) Entgegenhaltungen:
- EP-A- 0 216 947
- EP-A- 0 858 056
- DE-A- 3 634 865
- US-A- 5 479 026
- US-A- 6 060 143

## Beschreibung

Die Erfindung betrifft ein Sicherheitssiegel und ein Verfahren zu dessen Herstellung.

Häufig besteht der Wunsch, Gegenstände gegen ungewolltes Kopieren schützen und deren Authentizität einfach feststellen zu können. Bei diesen Gegenständen kann es sich beispielsweise um Markenprodukte (elektronische Bauteile, Cömputerbauteile, pharmazeutische Erzeugnisse, Bild-, Ton- und Datenträger, Kleidungsartikel, Banknoten, etc.) handeln. Hierfür werden häufig sogenannte Sicherheitssiegel verwendet, die auf einer Oberfläche des Gegenstandes möglichst unlösbar angebracht werden und die überdies einen gewissen Kopierschutz bieten. Das heißt, diese Sicherheitssiegel sollten sich nicht allzu einfach über ein herkömmliches Kopierverfahren kopieren lassen. Insofern weisen solche Sicherheitssiegel beispielsweise bestimmte Merkmale auf, die mittels eines einfachen Kopiergerätes nicht kopiert werden können. So kann beispielsweise abhängig vom Betrachtungswinkel das Sicherheitssiegel unterschiedliche Motive zeigen, indem es beispielsweise ein Hologramm mit verschiedenen aufgezeichneten Bildern enthält, die abhängig vom Betrachtungswinkel sichtbar werden.

Damit diese Sicherheitssiegel einen ausreichenden Kopierschutz bieten können, sind sie in der Regel auch nur über komplizierte Herstellungsverfahren fertigbar, so daß sie in speziellen auf die Herstellung von solchen Sicherheitssiegeln spezialisierten Fertigungsstätten hergestellt werden müssen. Dies macht es aber unter anderem schwierig, individuelle Information in jedes Sicherheitssiegel einzugeben. Dies kann nur dadurch geschehen, daß entweder vorab eine bestimmte Anzahl solcher Sicherheitssiegel mit jeweils individueller Beschriftung oder dgl. in Auftrag gegeben und danach von der Fertigungsstätte hergestellt werden müssen. Meist läßt sich die individuelle Information aber nicht beliebig im voraus festlegen, so daß häufig Einzelanfertigungen nötig werden, welche die Herstellungskosten selbstverständlich in die Höhe treiben.

Es sind ferner Informationsträger bekannt (beispielsweise Post- oder Grußkarten mit aufgedrucktem Bildmotiv), bei denen mit einer über einem Bildmotiv angeordneten, regelmäßigen Lentikularlinsenanordnung ein 3D-Effekt oder das Umschalten zwischen mehreren Bildmotiven erzielbar ist. Die Lentikularlinsen liegen in gleichmäßig angeordneten Zeilen über dem Bildmotiv, wobei beispielsweise unter jeder Lentikularlinsen-Zeile mehrere Bildzeilen entweder von verschiedenen Ansichten eines Bildes (3D-Effekt) oder von verschiedenen Bildern (betrachtungswinkelabhängiges Umschalten zwischen unterschiedlichen Bildmotiven) aufgedruckt sind. Abhängig von dem Betrachtungswinkel fokusiert die Lentikularlinsen-Zeile jeweils nur auf eine der mehreren ihr zugeordneten Bildzeilen. Ein ähnlicher, jedoch lichtschwächerer Effekt wird auch mit gleichmäßig angeordneten sogenannten Mikroschlitzen in einer ansonsten absorbierenden (also dunklen) Oberflächenschicht erreicht, die entsprechend den Lentikularlinsen-Zeilen jeweils über mehreren Bildzeilen angeordnet sind.

Die EP-A-0 216 947 zeigt einen kartenförmigen Datenträger mit einem Substrat, auf dem eine transparente Deckfolie mit optischen Linsen aufgebracht ist, deren Anordnung eine Information darstellen kann. Das Substrat wird durch die Deckfolie hindurch mittels eines Lasers beschrieben, wobei aufgrund der Linsenwirkung der Deckfolie unterschiedliche Schwärzungsgrade auf dem Substrat erzielt werden. Wird der Kartenträger senkrecht von oben betrachtet, so erscheint genau das Laser-eingeschriebene Informationsmuster, während unter einem leicht geneigten Betrachtungswinkel ein unterschiedliches Informationsmuster erscheint, da die Linsen der Deckfolie auf andere Bereiche des Substrats bündeln.

Die DE 36 34 865 A zeigt einen Datenträger, bei dem auf einer ersten Schicht eine erste Information aufgedruckt ist, und auf einer zweiten darüberliegenden Kunststoffschicht ein Linsenraster vorgesehen ist. Beim Beschreiben der ersten Schicht durchdringt der Laserstrahl das Linsenraster und erzeugt im darunterliegenden Bereich die gewünschte erste Information. Durch die Wirkung der Linsen läßt sich die aufgezeichnete Information nur aus bestimmten Winkeln erkennen.

Die US-5,479026 zeigt den Oberbegriff der unabhängigen Ansprüche. Bei ihr ist die erste Schicht auf einem separaten Datenträger vorgesehen und setzt sich aus einem Linsenmuster oder Lochmuster zusammen. Die zweite Datenschicht ist auf einer separaten Decodierschicht vorgesehen, die zum Decodieren zwischen den Datenträger und eine Detektoranordnung geschoben wird.

Der Erfindung liegt die Aufgabe zugrunde, ein kundenindividualisierbares Sicherheitssiegel sowie ein Verfahren zu dessen Herstellung bereitzustellen.

Die Erfindung löst diese Aufgabe jeweils mit den Gegenständen der Ansprüche 1 und 15.

Bevorzugte Ausführungsbeispiele der Erfindung sind in den Unteransprüchen beschrieben.

Zum leichteren Verständnis der Erfindung, wird das obige allgemeine Prinzip nunmehr kurz anhand spezieller Beispiele beschrieben, ohne hiermit jedoch den Schutzbereich auf diese speziellen Beispiele einzuschränken. Ein spezielles Ausführungsbeispiel wird ferner detailliert in der nachfolgenden Figurenbeschreibung erläutert.

Gemäß einem ersten Beispiel ist auf der ersten Schicht eine erste Information beispielsweise in Form eines Bildes, Schriftzuges, etc. aufgedruckt. Hierzu sind die ersten Abschnittselemente so geformt und zueinander angeordnet, daß sie zusammen die erste Information darstellen. Die zweite Schicht enthält nunmehr dritte Abschnittselemente mit das Licht reflektierender Eigenschaft (Reflektorfolie, etc.), welche dem Schriftzug der ersten Schicht angepaßt sind. Die dritten Abschnittselemente sind daher beispielsweise identisch geformt und angeordnet wie die ersten Abschnittselemente und direkt über diesen angeordnet. Ferner enthält die erste Schicht an den Stellen, die nicht von den ersten Abschnittselementen gebildet werden, ebenfalls das Licht reflektierende Elemente, über denen unmittelbar zweite transparente Abschnittselemente (mit im übrigen das Licht nicht beeinflussender Eigenschaft) der zweiten Schicht angeordnet sind. Die Anordnung der zweiten und dritten Abschnittselemente der zweiten Schicht stellt somit zusammen die zweite Information dar, die in diesem speziellen Beispiel im wesentlichen identisch der ersten Information ist, d.h. auf der zweiten Schicht wäre getrennt der gleiche Schriftzug wie auf der ersten Schicht erkennbar, lediglich in spiegelnder anstatt in aufgedruckter Form. Allerdings erscheint dem Betrachter des Sicherheitssiegels bei direkter Aufsicht auf das Sicherheitssiegel lediglich ein Spiegelbild. Erst bei schräger Aufsicht auf das Sicherheitssiegel wird die dritte Information erkennbar, nämlich der eigentliche auf der ersten Schicht aufgedruckte Schriftzug

Gemäß einem zweiten Beispiel sind auf der ersten Schicht wiederum erste Abschnittselemente aufgedruckt, welche zusammen gesehen ein bestimmtes Bild oder Schriftzug, etc. als erste Information ergeben. Die auf der ersten Schicht angeordnete zweite Schicht enthält nunmehr zweite transparente und dritte das Licht absorbierende Abschnittselemente (beispielsweise geschwärzte oder anderweitig gefärbte Abschnitte), die zusammen gesehen die zweite Information darstellen und ferner so zueinander angeordnet sind, daß das Gesamtbild der ersten Schicht erst unter einem schrägen Betrachtungswinkel (z.B. vollständig) sichtbar wird, während bei senkrechter Aufsicht ein anderes Bild (gegebenenfalls ein Graumuster oder nur Ausschnitte des eigentlichen Bildes, etc.) erkennbar ist.

Gemäß einem dritten Beispiel sind auf der ersten Schicht erste Abschnittselemente aufgedruckt, welche zusammen gesehen ein Bild oder einen Schriftzug etc. ergeben, während die zweite Schicht transparente zweite Abschnittselemente und Lentikularlinsen, lichtbeugende Strukturen (beispielsweise über holografische Techniken hergestellte Gitterstrukturen) oder Prismen als dritte Abschnittselemente umfaßt, welche das Licht bei Aufsicht unter einem bestimmten Winkel in die erste Schicht ablenken. Die zweiten und dritten Abschnittselemente können nunmehr so zueinander angeordnet sein bezüglich der ersten Abschnittselemente, daß bei Aufsicht ein bestimmtes Bild (dritte Information) sichtbar wird, und bei schräger Ansicht ein anderes Bild. Dies wird nachstehend detailliert erläutert.

Gemäß einem vierten Beispiel ist ein aus den ersten Abschnittselementen zusammengesetzter Schriftzug auf der ersten Schicht aufgedruckt. Die zweite Schicht enthält nunmehr den gleichen Schriftzug, der auch genau über dem Schriftzug der ersten Schicht angeordnet und aus das Licht beugenden dritten Abschnittselementen zusammengesetzt ist, und ist im übrigen transparent (zweite Abschnittselemente). Von den das Licht beugenden dritten Abschnittselementen ist ein Teil so ausgestaltet, daß er bei senkrechter Aufsicht transparent ist und bei schräger Aufsicht beispielsweise in den Regenbogenfarben schillert. Der andere Teil ist beispielsweise auch bei schräger Aufsicht teilweise transparent. Dadurch kann bei schräger Aufsicht eine dritte Information sichtbar werden, die einerseits aus Teilen des Schriftzuges der ersten Schicht und Teilen des schillernden Schriftzuges der zweiten Schicht zusammengesetzt ist und insgesamt unterschiedlich zu der ersten und der zweiten Information sein kann.

Der betrachtungswinkelabhängige Effekt wird im Prinzip dadurch erreicht, daß die zweite Schicht beabstandet auf der ersten Schicht angeordnet ist. Die dritte Information wird insbesondere (wie beim dritten und vierten obigen Beispiel deutlich wird) durch ein Zusammenwirken aller drei Abschnittselemente dargestellt. Somit entsteht die dritte Information lediglich in einem bestimmten Betrachtungswinkelbereich durch eine Verknüpfung der ersten und der zweiten Information.

Selbstverständlich gibt es viele Möglichkeiten, auf der ersten Schicht mittels der ersten Abschnittselemente eine erste Information (sichtbar) aufzubringen. Wie oben bereits erwähnt, kann die Information durch reflektierende und nicht reflektierende Abschnittselemente, bedruckte und unbedruckte Abschnittselemente, beispielsweise transparente und nicht transparente, das Licht brechende, beugende, streuende, absorbierende und das Licht nicht brechende, beugende, absorbierende Abschnittselemente oder eine beliebige Kombination aus diesen, etc. aufgebracht werden. Auch ist die formgemäße Ausgestaltung der ersten, zweiten und dritten Abschnittselemente beliebig; entsprechend der Form dieser Abschnittselemente müssen lediglich diese Abschnittselemente in der ersten und in der zweiten Schicht dann so zueinander angeordnet werden, daß die dritte Information lediglich unter einem bestimmten Betrachtungswinkel sichtbar wird. Bei den transparenten zweiten Abschnittselementen kann es sich beispielsweise auch um Löcher in der zweiten Schicht handeln. Entscheidend ist, daß ein Teil des Lichtes durch die zweite Schicht hindurch gelangt und die Information der ersten Schicht nach außen sichtbar macht, wobei die transparenten zweiten Abschnittselemente darüber hinaus auch beispielsweise brechende, beugende, etc. Eigenschaften aufweisen können. Ferner sei bemerkt, daß der Begriff "Information" im breitesten Sinne zu verstehen ist. So wird darunter insbesondere auch durch eine Anordnung schwarzer und weißer Pixel gebildetes scheinbares Graumuster (wobei die Anordnung der weißen und schwarzen Pixel beispielsweise eine kodierte Information enthält), verstanden. Auch kann der Betrachtungswinkelbereich, unter dem die dritte Information sichtbar wird, ein großer oder lediglich ein sehr schmaler Winkelbereich sein.

Der Unterschied zu den bekannten oben erwähnten Informationsträgern (Gruß- und Postkarten, etc.) besteht unter anderem darin, daß die zweiten und dritten Abschnittselemente für jedes Sicherheitssiegel individuell angeordnet sind und in dieser Anordnung bereits eine auslesbare zweite Information steckt, mit der die Authentizität des Sicherheitssiegels geprüft werden kann. Die bekannten Informationsträger tragen keine solche Information in der zweiten Schicht, da bei ihnen beispielsweise die Lentikularlinsen bzw. Mikroschlitze gleichmäßig über die Fläche verteilt sind und somit (von Postkarte zu Postkarte) keine individualisierte Information darstellen können.

Der Vorteil der Erfindung liegt nun darin, daß bereits kundenindividuell insbesondere die zweite Schicht mit der speziellen Anordnung zweiter und dritter Abschnittselemente bei einer Spezialfertigungsstätte hergestellt werden kann und diese zweite Schicht auf die erste Schicht geklebt oder anderweitig auf dieser unlösbar befestigt wird, wobei die erste Schicht noch nicht die erste Information in Form der speziell angeordneten ersten Abschnittselemente enthält. Kundenindividuell (bzw. individualisierbare zweite Information) bedeutet auch, daß von der Spezialfertigungsstätte eine Serie gleicher Sicherheitssiegel mit der gleichen zweiten Information hergestellt werden kann, die der Kunde selbst weiter individualisieren kann (siehe unten). Diese Information kann dann anschließend beispielsweise vom Kunden selbst mittels geeigneter Druckermittel (zum Beispiel eines Laserbrenners, etc.) durch die zweite Schicht hindurch auf die erste Schicht gedruckt bzw. geschrieben werden. Dabei hat der Kunde - wie in der nachfolgenden Beschreibung des bevorzugten Ausführungsbeispiels näher erläutert wird - (trotz) der bereits fest vorgegebenen Anordnung der zweiten und dritten Abschnittselemente bei der Bedruckung der ersten Schicht noch eine freie Auswahlmöglichkeit für die spezielle erste Information und damit gekoppelt die dritte Information, die unter dem speziellen Betrachtungswinkel sichtbar werden soll. Somit kann der Kunde selbst sein kundenindividualisiertes Sicherheitssiegel fertigstellen. Dieser hat beim Aufbringen der kundenindividualisierten Information (zum Beispiel einer laufenden Seriennummer, etc.) also großen Spielraum.

Selbstverständlich können die Sicherheitssiegel auch bereits von der Spezialfertigungsstätte komplett fertig erstellt werden, d.h. bereits zusammen mit der auf der ersten Schicht sichtbar aufgebrachten Information. Die Authentizität dieses so gefertigten Sicherheitssiegels kann anschließend einerseits an dem leicht erkennbaren typischen Merkmal festgestellt werden, nämlich daß die dritte Information erst unter dem bestimmten Betrachtungswinkel sichtbar wird, und andererseits an der ebenfalls auslesbaren zweiten Information, nämlich der speziellen Anordnung der zweiten und dritten Abschnittselemente in der zweiten Schicht (siehe oben).

Bevorzugt weisen die transparenten zweiten Abschnittselemente ferner die Eigenschaft auf, daß sie das Licht im wesentlichen unverändert passieren lassen. Mit anderen Worten brechen oder beugen sie das Licht nicht weiter, wodurch vorteilhaft die Fertigung des Sicherheitssiegels vereinfacht werden kann.

Um die Herstellung des kundenindividualisierten Sicherheitssiegels noch weiter zu vereinfachen, bildet je ein zweites und ein drittes Abschnittselement zusammen ein Informationselement der zweiten Schicht, dem ein aus zwei ersten Abschnittselementen gebildetes Informationselement bei der ersten Schicht zugeordnet ist, wobei die einander zugeordneten Informationselemente der ersten und der zweiten Schicht ein sichtbares Informationselement bilden, das abhängig vom Betrachtungswinkel wenigstens zwei unterschiedliche Informationsgehalte hat. Somit kann beispielsweise die Form und Anordnung der ersten, zweiten und dritten Abschnittselemente so gewählt werden, daß genau zwei Abschnittselemente der ersten Schicht und zwei Abschnittselemente der zweiten Schicht ein einzelnes Informationselement bilden, das die betrachtungswinkelabhängige Eigenschaft aufweist. Vorteilhaft läßt sich ein solches Sicherheitssiegel anschließend beim Kunden noch leichter mit der Information auf der ersten Schicht beschreiben.

Damit die Fertigung auch leicht von einem Computer gesteuert, automatisch durchgeführt werden kann, sind die ersten, die zweiten und/oder die dritten Abschnittselemente bevorzugt pixelförmig.

Grundsätzlich kann die zweite Schicht unterschiedliche Dicken aufweisen, abhängig davon, ob es sich um ein zweites oder drittes Abschnittselement handelt. Dies ist beispielsweise der Fall, wenn es sich bei den transparenten zweiten Abschnittselementen um Löcher in der zweiten Schicht handelt. Aus Fertigungszwecken wird jedoch bevorzugt, daß die ersten und die zweiten Abschnittselemente in der zweiten Schicht in einer Ebene angeordnet sind und die zweite Schicht eine im wesentlichen gleichmäßige Dicke aufweist. Somit kann die zweite Schicht beispielsweise eine durchgehende transparente Schicht sein, die lediglich an den Stellen an ihrer Oberseite schwarz bedruckt ist, an denen die dritten Abschnittselemente mit einer das Licht absorbierenden Eigenschaft angeordnet sein sollen. Damit die zweite Schicht insgesamt nicht zu dick wird und gegebenenfalls dadurch die optische Qualität beeinträchtigt, wird eine transparente Abstandsschicht zwischen der ersten und der zweiten Schicht angeordnet, damit weiterhin die betrachtungswinkelabhängige Eigenschaft erhalten bleibt. Abhängig von der Dicke der transparenten Abstandsschicht ist dann auch der jeweilige Betrachtungswinkelbereich vorbestimmt, unter dem die dritte Information sichtbar wird.

Bevorzugt stellen die Elementepaare auf der ersten Schicht zusammen unter einem im wesentlichen nicht-senkrechten Betrachtungswinkel ein Graumuster dar, wobei die zugeordneten Elementepaare der zweiten Schicht derart angeordnet sind, daß unter einem im wesentlichen senkrechten Betrachtungswinkel die dritte Information sichtbar wird. Vorteilhaft wird hiermit ein besonders kontrastreicher betrachtungswinkelabhängiger Effekt erzielt, da im wesentlichen unter allen schrägen Betrachtungen des Sicherheitssiegels lediglich ein Graumuster (d.h. ein scheinbar niedriger Informationsgehalt) sichtbar wird und erst bei direktem senkrechten Betrachten die eigentliche Information in Form eines Bildes oder Schriftzuges, etc. erkennbar wird.

Bevorzugt sind die beiden Abschnittselemente der Elementepaare der ersten Schicht jeweils im wesentlichen direkt unterhalb der beiden Abschnittselemente des zugeordneten Elementepaares der zweiten Schicht angeordnet. Dies stellt wiederum eine Vereinfachung des Fertigungsverfahrens für die Sicherheitssiegel dar, da die relative Lage der einzelnen Abschnittselemente der ersten und der zweiten Schicht zueinander stark vereinfacht ist. Der betrachtungswinkelabhängige Effekt wird nunmehr durch die entsprechende Auswahl der einzelnen Abschnittselemente bestimmt, d.h. beispielsweise bei pixelförmigen Abschnittselementen, welche Farbe die Abschnittselemente der ersten Schicht jeweils erhalten und wie die Aufteilung der beiden entsprechenden Abschnittselemente des zugeordneten Elementepaares der zweiten Schicht in transparente zweite oder das Licht beeinflussende dritte Abschnittselemente aussieht.

Bei dem das Licht brechenden bzw. beugenden dritten Abschnittselementen der zweiten Schicht kann es sich bevorzugt entweder um Prismenelemente, Lentikularlinsenelemente bzw. transparente, lichtbeugende Elemente handeln. Mit diesen das Licht brechenden dritten Abschnittselementen sind optisch hochwertige Sicherheitssiegel erhältlich. Eine einfache Möglichkeit, die Eigenschaften solcher Prismen oder Lentikularlinsen "künstlich" zu erzeugen, liegt in dem Vorsehen von transparenten, lichtbeugenden Gitterelementen, die beispielsweise als Hologramm in entsprechende lichtempfindliche Kunststoffschichten eingeschrieben sind. Diese Gitterelemente (z.B. Hologramme) können beispielsweise mittels eines Lasers in die zweite Schicht geschrieben werden.

Zum leichteren automatischen Auslesen der individualisierten zweiten Information in der zweiten Schicht (Anordnung der zweiten und dritten Abschnittselemente zueinander) sind die das Licht beugenden dritten Abschnittselemente der zweiten Schicht bevorzugt ferner derart ausgestaltet, daß sie unter einem bestimmten Betrachtungswinkelbereich, der unterschiedlich zu dem Betrachtungswinkelbereich ist, unter dem die dritte Information sichtbar wird, eine von außen lesbare Beugungsstruktur, insbesondere ein Hologramm, erzeugen. Diese Beugungsstruktur kann dann beispielsweise mittels einer einfachen CCD-Kamera aufgezeichnet und somit die Anordnung der dritten Abschnittselemente (und damit auch der zweiten Abschnittselemente) festgestellt und überprüft werden.

Bevorzugt sind die Prismenelemente, Lentikularlinsenelemente und/oder transparenten, lichtbeugenden Gitterelemente eines Elementepaares der zweiten Schicht jeweils unmittelbar über einem ersten Abschnittselement des zugehörigen Elementepaares der ersten Schicht angeordnet und derart ausgestaltet, daß sie das senkrecht auf das Sicherheitssiegel auffallende Licht auf das andere Abschnittselement des zugehörigen Elementepaares der ersten Schicht ablenken. Diese Maßnahme erleichtert vorteilhaft die Fertigung eines solchen Sicherheitssiegels.

Um die Kopiersicherheit noch weiter zu erhöhen, wird die zweite Information in der zweiten Schicht (also die spezielle Anordnung der zweiten und dritten Abschnittselemente in der zweiten Schicht) bevorzugt mittels eines Verschlüsselungsalgorithmus erzeugt. Beim Auslesen der zweiten Information kann mittels des entsprechenden Entschlüsselungsalgorithmus leicht überprüft werden, ob beispielsweise eine entsprechende entschlüsselte Information erhalten wird.

Dabei wendet der Verschlüsselungsalgorithmus bevorzugt für jedes Sicherheitssiegel einen individuellen Verschlüsselungsschlüssels an. Somit ist es hinterher beispielsweise möglich, die Authentizität eines Sicherheitssiegels daran festzustellen, daß die ausgelesene Anordnung der Elementepaare der zweiten Schicht (also die zweite Information) bei entsprechend umgekehrter Anwendung des Verschlüsselungsalgorithmusses den individuellen Verschlüsselungsschlüssel erzeugt. Dieser Verschlüsselungsschlüssel kann beispielsweise sichtbar auf der ersten Schicht aufgedruckt und beispielsweise für jedes Sicherheitssiegel unterschiedlich sein. Stimmt der aufgedruckte Verschlüsselungsschlüssel nicht mit dem ausgelesenen, erzeugten Verschlüsselungsschlüssel überein, so handelt es sich um ein gefälschtes Sicherheitssiegel.

Der Verschlüsselungsalgorithmus kann bevorzugt auch einen Masterschlüssel für mehrere Sicherheitssiegel anwenden. Somit können mehrere Sicherheitssiegel zwar mit einer unterschiedlichen Anordnung zweiter und dritter Abschnittselemente (zweite Information) erzeugt werden. Bei Eingabe dieser zu Prüfzwecken ausgelesenen zweiten Information in den inversen Verschlüsselungsalgorithmus muß jedoch für all diese Sicherheitssiegel der spezielle Masterschlüssel erhalten werden. Somit kann die Authentizität dieser Sicherheitssiegel bei Kenntnis des Masterschlüssels überprüft werden.

Die Erfindung sowie weitere Vorteile und Merkmale der Erfindung werden nunmehr anhand eines bevorzugten Ausführungsbeispiels mit Bezug auf die beigefügte Zeichnung näher erläutert. In der Zeichnung zeigt die einzige Figur eine schematische Querschnittansicht des Ausführungsbeispiels des erfindungsgemäßen Sicherheitssiegels, wobei zusätzlich zwei vom Betrachtungswinkel abhängige Informationsmuster ebenfalls schematisch dargestellt sind.

Das Sicherheitssiegel weist eine erste Schicht 1, eine darauf angeordnete transparente Abstandsschicht 2 und eine auf der Abstandsschicht 2 angeordnete zweite Schicht 3 auf. Bei der ersten Schicht 1 kann es sich beispielsweise um ein bedruckbares Papier-, Kunststoff- oder sonstiges Material handelt. Ferner kann eine (nicht dargestellte) Trägerschicht unterhalb der ersten Schicht 1 zum Verstärken des Sicherheitssiegels angeordnet sein. Diese Trägerschicht kann wiederum eine Klebeschicht enthalten, mit der das Sicherheitssiegel beispielsweise unlösbar auf einem kopierzuschützenden Gegenstand aufgeklebt werden kann. Bei der Trägerschicht kann es sich auch um eine Stoffetikette handeln, die in Bekleidungsstücke eingenäht werden kann. Neben den oben aufgezählten einfacheren Ausgestaltungsmöglichkeiten kann die erste Schicht 1 zwecks verbesserter optischer Eigenschaften auch als Fotoemulsionsschicht, oder ähnliches ausgestaltet sein, auf welcher nachträglich mittels eines geeigneten Belichtungsmittels kundenindividuell eine bestimmte Information aufgebracht werden kann.

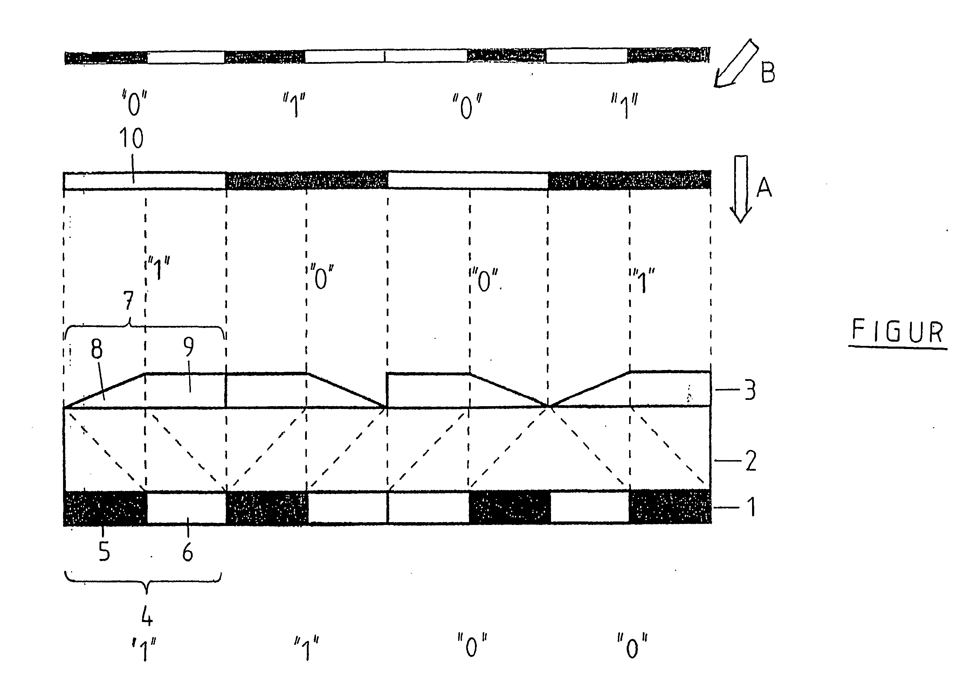

Bei der transparenten Abstandsschicht 2 handelt es sich bevorzugt um eine einfache transparente Kunststoffolie, welche das Licht im wesentlichen unverändert passieren läßt. Die Dicke der transparenten Abstandsschicht 2 bemißt sich bei dem in Figur 1 dargestellten Ausführungsbeispiel nach den Ablenkeigenschaften optischer Abschnittselemente in der zweiten Schicht 3 und den Abständen der informationstragenden Abschnittselemente in der ersten Schicht 1. Dies wird nachstehend am Zusammenspiel der Abschnittselemente der ersten und zweiten Schicht 1 und 3 näher erläutert.

Die erste Schicht 1 ist beispielsweise in Elementepaare 4 mit jeweils zwei Pixeln 5 und 6 aufgeteilt, die von ihrer Pixelfläche gleich groß sind. Jeder Pixel 5 oder 6 kann individuell eingefärbt werden. In dem dargestellten Ausführungsbeispiel kann er beispielsweise die Farben weiß und schwarz annehmen. Die zwei Pixel 5 und 6 eines Elementepaares 4 bilden dabei ein Informationselement, das entweder weiß ist (falls beide Pixel 5 und 6 weiß sind), grau ist (falls genau ein Pixel 5 oder 6 schwarz und der andere weiß ist) und schwarz ist (falls beide Pixel 5 und 6 schwarz sind). Für die Darstellung eines grauen Informationselements bestehen also zwei Kombinationsmöglichkeiten, je nachdem ob der Pixel 5 schwarz und-der Pixel 6 weiß oder umgekehrt der Pixel 5 weiß und der Pixel 6 schwarz ist.

Die zweite Schicht 3 ist ebenfalls aus Elementepaaren 7 zusammengesetzt, die jeweils aus zwei Abschnittselementen 8 und 9 bestehen. In dem dargestellten Ausführungsbeispiel ist das Abschnittselement 8 als Prisma und das Abschnittselement 9 als transparentes, im übrigen das Licht nicht beeinflussendes Element ausgebildet. Ferner ist die Aufteilung der Elementepaare 7 in der zweiten Schicht 3 und der Elementepaare 4 in der ersten Schicht 1 derart, daß jeweils ein Abschnittselement 8 oder 9 der zweiten Schicht 3 jeweils genau oberhalb einem zugehörigen Abschnittselement 5 oder 6 der ersten Schicht 1 angeordnet ist. So ist beispielsweise (wie aus der Figur ersichtlich) das Abschnittselement 9 der zweiten Schicht 3 exakt oberhalb dem Abschnittselement 6 (also dem weißen Pixel) der ersten Schicht 1 angeordnet. Bei Aufsicht auf das Sicherheitssiegel wird an der Position des transparenten Abschnittselements 9 der zweiten Schicht 3 also der weiße Pixel 6 der ersten Schicht 1 sichtbar.

Das Prisma 8 des Elementepaares 7 ist ferner derart ausgebildet, daß es den senkrecht auf das Sicherheitssiegel einfallenden Lichtstrahl auf das Abschnittselement 6 des Elementepaares 4 ablenkt (dies ist durch die schräge gestrichelte Linie in der Figur dargestellt). Mit anderen Worten ist bei senkrechter Betrachtung (welche durch einen Pfeil A schematisch dargestellt ist) des Sicherheitssiegels an der Position des Abschnittselementes 8 ebenfalls der weiße Pixel 6 sichtbar. Das Elementepaar 7 der zweiten Schicht 3 stellt somit im Prinzip einen aus zwei Pixeln der ersten Schicht 1 zusammengesetzten Pixel 10 (also ein Informationselement) dar, das je nach Betrachtungswinkel eine unterschiedliche Farbe annehmen kann. Bei senkrechter Betrachtung des Sicherheitssiegels stellt es - wie oben ausgeführt - einen weißen Pixel 10 dar.

Wird das Sicherheitssiegel nunmehr unter einem schrägen Winkel betrachtet (der schematisch durch einen Pfeil B dargestellt ist), so ist an der Position des Prismas 8 nicht mehr der weiße Pixel 6 des zugehörigen Elementepaares 4 erkennbar, sondern statt dessen der schwarze Pixel 5 des Elementepaares 4. An der Position des transparenten Abschnittselements 9 der zweiten Schicht 3 ist jedoch weiterhin der weiße Pixel 6 erkennbar, so daß insgesamt das in der Figur dargestellte graue (halb schwarz/halb weiß) Informationselement 10 erkennbar wird.

Insgesamt sind somit bei zwei unterschiedlichen Anordnungsmöglichkeiten der Abschnittselemente 8 und 9 des Elementepaares 7 und zwei unterschiedlichen Anordnungsmöglichkeiten der Pixel 5 und 6 des Elementepaares 4 vier Kombinationen möglich, die alle in der Figur nebeneinander dargestellt sind. Wie aus der Figur ersichtlich wird, stehen für die Darstellung eines weißen Informationselementes zwei unterschiedliche Anordnungen der Pixel 5 und 6 eines Elementepaares 4 zur Verfügung. Definiert man nunmehr für eine Anordnung der Abschnittselemente 5 und 6 in dem Elementepaar 4, bei dem links ein schwarzer Pixel 5 und rechts ein weißer Pixel 6 ist, eine bestimmte Information, beispielsweise eine logische 1, und für den umgekehrten Fall, bei dem links ein weißer Pixel 6 und rechts ein schwarzer Pixel 5 ist, ein anderes Informationselement, beispielsweise eine logische Null, so liegt in dem scheinbar zufälligen Graumuster (erste Information) der ersten Schicht 1 eine erste Information vor, bestehend aus einer bestimmten Abfolge von logischen Einsen und logischen Nullen.

Ob der Betrachter bei senkrechter Betrachtung des Sicherheitssiegels nunmehr ein weißes oder schwarzes Informationselement 10 erkennt, hängt von der Anordnung der Abschnittselemente 8 und 9 in dem Elementepaar 7 der zweiten Schicht 3 ab. In der Figur ist unterhalb der ersten Schicht 1 noch die Codierung angegeben, die sich durch die Anordnung der Pixel 5 und 6 in einem Elementepaar 4 ergibt. Somit ist leicht erkennbar, daß für eine logische Eins in der ersten Schicht 1 je nach Anordnung der Abschnittselemente 8 und 9 in dem Elementepaar 7 entweder ein weißes oder ein schwarzes Informationselement 10 sichtbar wird. Dies gilt analog für eine logische Null des Elementepaares 4. Die Anordnung der Abschnittselemente 8 und 9 der Elementepaare 7 in der zweiten Schicht 3 stellt somit eine Art Verschlüsselungsschlüssel für die Information in der ersten Schicht 1 dar. Dieser Verschlüsselungsschlüssel gilt jedoch nur für die senkrechte Betrachtung des Sicherheitssiegels. Ansonsten ändert sich der Verschlüsselungsschlüssel der zweiten Schicht 3, da sich beispielsweise der Ablenkwinkel der Prismen 8 derart ändert, daß nicht mehr das unter einem senkrechten Betrachtungswinkel erscheinende Element 4 oder 5 sichtbar wird, sondern genau das andere dieser beiden Elemente 4 und 5. Unter dem geänderten Verschlüsselungsschlüssel wird dann nur noch das scheinbare Graumuster der ersten Schicht 1 sichtbar. Mit anderen Worten handelt es sich also um einen betrachtungswinkelabhängigen Verschlüsselungsschlüssel.

Die Authentizität eines solchen Sicherheitssiegels kann nunmehr einerseits daran geprüft werden, ob unter dem vorgegebenen Betrachtungswinkel die eigentliche dritte Information sichtbar wird, und danach, ob die spezielle Anordnung der zweiten und dritten Abschnittselemente 8 und 9 der zweiten Schicht 3, nämlich die zweite Information einer der prüfenden Stelle bekannten zweiten Information eines echten Sicherheitssiegels entspricht.

Diese zweite Information kann nun ihrerseits mit einem Verschlüsselungsalgorithmus verschlüsselt worden sein. Somit kann geprüft werden, ob nach Eingabe der ausgelesenen zweiten Information in einen inversen Entschlüsselungsalgorithmus beispielsweise ein bestimmter Verschlüsselungsschlüssel für die zweite Information der zweiten Schicht 3 erhalten wird.

So stellt - wie gesagt - jedes Elementepaar 7 der zweiten Schicht 3 ebenfalls zwei unterschiedliche Informationen dar, je nachdem ob das Prisma 8 links und das transparente Element 9 rechts oder umgekehrt angeordnet sind. Dies ist in der Figur durch eine logische 1 (links das Prisma 8 und rechts das transparente Abschnittselement 9) und durch ein logische 0 (rechts das Prisma 8 und links das transparente Abschnittselement 9) dargestellt. Die Abfolge der logischen 0 und 1 der zweiten Schicht 3 stellt zusammen die zweite Information dar.

Diese Anordnung kann beispielsweise mit einem Laserstrahl und einer Detektionsoptik abgetastet werden, da der Laserstrahl unterschiedlich abgelenkt wird, je nachdem ob es sich um ein Prisma 8 oder ein transparentes Element 9 handelt.

Das dritte Abschnittselement 8 kann auch eine lichtbeugende Struktur sein, beispielsweise ein holografisch aufgezeichnetes Gitter, daß bei senkrechtem Lichteinfall das Licht wie das Prisma 8 ablenkt und bei nicht-senkrechtem Lichteinfall beispielsweise ein Regenbogenhologramm rekonstruiert. In diesem Fall kann die Anordnung dieser Gitter-Abschnittselemente 8 mit einer einfachen CCD-Kamera ausgelesen werden. Die Gitter-Abschnittselemente 8 erzeugen nämlich unter all den Betrachtungswinkeln, die verschieden zu dem Betrachtungswinkel sind, unter dem die dritte Information sichtbar wird, ein holografisches reelles Bild an einer bestimmten Position im Raum, das mit der an dieser Position angeordneten CCD-Kamera einfach aufgezeichnet werden kann. Zudem stellen solche holografischen Gitterstrukturen für das Auge sichtbar erkennbare, charakteristische Merkmale (Regenbogenfarbeneffekte, etc.) für das Sicherheitssiegel dar, die sich überdies nur schwer kopieren lassen.

Das abgetastete Bitmuster kann dann - wie erwähnt - dem Entschlüsselungsalgorithmus eingegeben werden, der für jedes Bitmuster eine charakteristische Kennzahl (Verschlüsselungsschlüssel) liefert. Diese Kennzahl kann nunmehr als Information in dem Graumuster der ersten Schicht 1 enthalten sein, d.h., daß diese Kennzahl bei senkrechter Betrachtung des Sicherheitssiegels erkennbar wird. Somit kann anhand eines Vergleichs der sichtbaren Kennzahl mit der durch den Entschlüsselungsalgorithmus ermittelten Kennzahl des abgetasteten Bitmusters die Authentizität des Sicherheitssiegels festgestellt werden.

Alternativ kann der Verschlüsselungsalgorithmus auch einen Masterschlüssel anwenden. Das ausgelesene Bitmuster wird dann dem Entschlüsselungsalgorithmus eingegeben, der bei "echten" Sicherheitssiegeln den Masterschlüssel rekonstruieren muß. Der Entschlüsselungsalgorithmus kann in diesem Fall die Authentizität mehrerer Sicherheitssiegel anhand eines einzigen Masterschlüssels feststellen. Bei diesem alternativen Verfahren ist es erforderlich, daß die die Authentizität des Sicherheitssiegels prüfende Stelle den Masterschlüssel kennt. Hierbei entfällt also das Einbringen der Kennzahl in die Information der ersten Schicht 1.

Ein solches Sicherheitssiegel kann nunmehr folgendermaßen hergestellt werden: Zuerst wird bei einer speziellen Fertigungsstätte eine beschreibbare erste Schicht 1 bereitgestellt, auf der die transparente Abstandsschicht 2 und darauf eine zweite Schicht 3 aufgebracht werden. Die zweite Schicht enthält eine über einen bestimmten Verschlüsselungsschlüssel verschlüsselte zweite Information (d.h. die Anordnung der Prismen 8 und transparenten Abschnittselemente 9 verköpert die über den Verschlüsselungsschlüssel verschlüsselte zweite Information). Die erste Schicht 1 ist somit noch unbeschrieben. Dies hat Vorteile, da die Herstellung der zweiten Schicht 3 in der Regel ein komplizierteres Fertigungsverfahren erfordert, das lediglich in speziellen Fertigungsstätten durchgeführt werden kann. Diese Fertigungsstätten können nunmehr die unbedruckten Sicherheitssiegel an die einzelnen Kunden verkaufen, welche das Sicherheitssiegel nunmehr individuell mit einer bestimmten Information beschreiben können. Hierzu ist lediglich die Kenntnis des Verschlüsselungsschlüssels der zweiten Schicht 3 notwendig (der Kunde muß also nicht mehr die Anordnung der zweiten und dritten Abschnittselemente 8 und 9 selber auslesen, diese ergibt sich aus dem Verschlüsselungsschlüssel). Beispielsweise kann der Kunde mit einem entsprechenden Laserbeschrifter (d.h. ein Laserstrahl ausreichender Stärke, welcher die unbeschriebene Schicht 1 an den gewünschten Pixeln 5 oder 6 schwärzt) seine individuelle Information auf dem Sicherheitssiegel aufbringen.

Die unter einem senkrechten Betrachtungswinkel erkennbare dritte Information kann über eine Exklusiv-ODER-Verknüpfung des Bitmusters der ersten Schicht 1 mit dem Bitmuster der zweiten Schicht 3 rekonstruiert werden. So ergibt sich für das in der Figur links liegende Informationselement 10 eine logische 0 (weißer Pixel), da das Elementepaar 7 der zweiten Schicht 3 eine logische 1 und das Elementepaar 4 der ersten Schicht 1 ebenfalls eine logische 1 zeigt.

Umgekehrt läßt sich auch bei vorgegebener unter senkrechtem Betrachtungswinkel sichtbarer dritter Information ("0101", bei dem in der Figur dargestellten Ausführungsbeispiel) die in die erste Schicht 1 einzuschreibende erste Information über eine Exklusiv-ODER-Verknüpfung der sichtbaren dritten Information ("0101") mit dem "Verschlüsselungsschlüssel" ("1001") (zweite Information) der zweiten Schicht 3 bestimmen. Somit kann der Kunde sich ein beliebiges Bild als Vorlage nehmen, dieses in ein Pixelraster aufteilen, dessen Pixel beispielsweise schwarz oder weiß sein können, wobei die Pixelgröße der Größe eines Elementepaares 7 bzw. 4 entspricht, und dann das in die erste Schicht 1 einzuschreibende Pixelmuster über die Exklusiv-ODER-Verknüpfung berechnen. Das Pixelmuster der zweiten Schicht 3 kann er dabei aus dem Verschlüsselungsalgorithmus ableiten, dem er beispielsweise die von der Fertigungsstätte mitgeteilte Kennzahl eingibt und der dann das konkrete Bitmuster der zweiten Schicht 3 berechnet.

Es sei bemerkt, daß das Prisma 8 beispielsweise mittels eines Hologrammabschnitts realisiert werden kann, indem also ein bestimmtes das Licht beugendes Hologrammstreifenmuster an die Position des Abschnittselements 8 in die zweite Schicht 3 geschrieben wird, das den Lichtstrahl gerade wie das Prisma 8 ablenkt.

## Patentansprüche

1. Sicherheitssiegel, mit:
a) einer ersten Schicht (1) zum Darstellen einer ersten Information, welche in erste Abschnittselemente (5, 6) eingeteilt ist,
b) einer zweiten Schicht (3), welche zweite transparente Abschnittselemente (9) und dritte Abschnittselemente (8) mit das Licht reflektierender, absorbierender, brechender, streuender oder beugender Eigenschaft umfaßt, wobei im Falle der reflektierenden, absorbierenden und streuenden Abschnittselemente eine transparente Abstandsschicht (2) zwischen der ersten (1) und der zweiten Schicht (3) angeordnet ist, wobei die zweiten und dritten Abschnittselemente derart zueinander angeordnet sind, daß sie zusammen eine für das Sicherheitssiegel individualisierte zweite Information darstellen,
c) wobei jeweils mehrere erste Abschnittselemente (5,6) in die erste Information darstellende Informationselemente (4) sowie zweite und dritte Abschnittselemente (8,9) in die zweite Information darstellende Informationselemente (7) aufgeteilt sind, und die zweiten und dritten Abschnittselemente (8,9) jedes Informationselement der zweiten Information derart angeordnet sind, daß je ein Informationselement (7) der zweiten Information ein Entschlüsselungsschlüssel für sein zugehöriges Informationselement (4) der ersten Information ist und das letztere nur unter einem bestimmten Betrachtungswinkel des Sicherheitssiegels als ein Informationselement (10) einer dritten nach außen sichtbaren Information entschlüsselt;
**dadurch gekennzeichnet,**
**daß** die ersten Abschnittselemente (5, 6) zum Darstellen der ersten Information bedruckbar ausgestaltet sind; und
die zweite Schicht (3) unlösbar auf der ersten Schicht (1) befestigt ist.

2. Sicherheitssiegel nach Anspruch 1, bei welchem die transparenten zweiten Abschnittselemente (9) ferner die Eigenschaft aufweisen, daß sie das Licht im wesentlichen unverändert passieren lassen.

3. Sicherheitssiegel nach Anspruch 1 oder 2, bei welchem die zweiten und die dritten Abschnittselemente (8, 9) in der zweiten Schicht (3) in einer Ebene angeordnet sind.

4. Sicherheitssiegel nach einem der vorhergehenden Ansprüche, bei welchem je ein zweites (9) und ein drittes Abschnittselement (8) zusammen ein Informationselement (7) der zweiten Schicht (3) bilden, dem ein aus zwei ersten Abschnittselementen (5, 6) gebildetes Informationselement (4) der ersten Schicht (1) zugeordnet ist, wobei die einander zugeordneten Informationselemente (4, 7) der ersten und der zweiten Schicht (1, 3) ein nach außen sichtbares Informationselement (10) der dritten Information bilden.

5. Sicherheitssiegel nach einem der vorhergehenden Ansprüche, bei welchem die zweite Schicht (3) durchgehend auf der ersten Schicht (1) angeordnet ist.

6. Sicherheitssiegel nach einem der Ansprüche 4 bis 5, bei welchem die Informationselemente (4) auf der ersten Schicht (1) zusammen unter einem im wesentlichen nicht-senkrechten Betrachtungswinkel ein Graumuster darstellen, wobei die zugeordneten Informationselemente (7) der zweiten Schicht (3) derart angeordnet sind, daß unter einem im wesentlichen senkrechten Betrachtungswinkel die dritte Information sichtbar wird.

7. Sicherheitssiegel nach einem der vorstehenden Ansprüche, bei welchem die das Licht brechenden dritten Abschnittselemente (8) der zweiten Schicht (3) Prismenelemente sind.

8. Sicherheitssiegel nach einem der Ansprüche 1 bis 6, bei welchem die das Licht brechenden dritten Abschnittselemente (8) der zweiten Schicht (3) Lentikularlinsenelemente sind.

9. Sicherheitssiegel nach einem der Ansprüche 1 bis 6, bei welchem die das Licht beugenden dritten Abschnittselemente (8) der zweiten Schicht (3) transparente, lichtbeugende Gitterelemente sind.

10. Sicherheitssiegel nach Anspruch 9, bei welchem die das Licht beugenden dritten Abschnittselemente (8) der zweiten Schicht (3) ferner derart ausgestaltet sind, daß sie unter einem bestimmten Betrachtungswinkelbereich, der unterschiedlich zu dem Betrachtungswinkelbereich ist, unter dem die dritte Information sichtbar wird, eine von außen lesbare Beugungsstruktur, insbesondere ein Hologramm, erzeugen.

11. Sicherheitssiegel nach einem der Ansprüche 7 bis 10, bei welchem die Prismenelemente, Lentikularlinsenelemente und/oder transparenten, lichtbeugenden Gitterelemente eines Informationselementes (7) der zweiten Schicht (3) jeweils unmittelbar über einem ersten Abschnittselement (5) des zugehörigen Informationselementes (4) der ersten Schicht (1) angeordnet und derart ausgestaltet sind, daß sie das senkrecht auf das Sicherheitssiegel auffallende Licht auf das andere Abschnittselement (6) des zugehörigen Informationselementes (4) der ersten Schicht (1) ablenken.

12. Sicherheitssiegel nach einem der Ansprüche 6 bis 11, bei welchem die zweite Information der zweiten Schicht (3) mittels eines Verschlüsselungsalgorithmus erzeugt wird.

13. Sicherheitssiegel nach Anspruch 12, bei welchem der Verschlüsselungsalgorithmus für jedes Sicherheitssiegel einen individuellen Verschlüsselungsschlüssel verwendet.

14. Sicherheitssiegel nach Anspruch 12, bei welchem der Verschlüsselungsalgorithmus einen Masterschlüssel für mehrere Sicherheitssiegel verwendet.

15. Verfahren zum Herstellen eines Sicherheitssiegels nach einem der vorhergehenden Ansprüche, bei welchem:
a) eine erste Schicht (1) bereitgestellt wird, die in erste Abschnittselemente (5, 6) eingeteilt wird,
b) eine zweite Schicht (3) bereitgestellt wird, welche zweite Abschnittselemente (9) mit transparenter und dritte Abschnittselemente (8) mit das Licht reflektierender, absorbierender, brechender, streuender oder beugender Eigenschaft umfaßt, wobei im Falle der reflektierenden, absorbierenden und streuenden Abschnittselemente eine transparente Abstandsschicht (2) zwischen der ersten (1) und der zweiten Schicht (3) angeordnet ist, wobei die zweiten und dritten Abschnittselemente derart zueinander angeordnet werden, daß sie zusammen eine für das Sicherheitssiegel individualisierte zweite Information darstellen,
c) jeweils mehrere erste Abschnittselemente (5,6) in die erste Information darstellende Informationselemente (4) sowie zweite und dritte Abschnittselemente (8,9) in die zweite Information darstellende Informationselemente (7) aufgeteilt werden, und die zweiten und dritten Abschnittselemente (8,9) jedes Informationselement der zweiten Information derart angeordnet werden, daß je ein Informationselement (7) der zweiten Information ein Entschlüsselungsschlüssel für sein zugehöriges Informationselement (4) der ersten Information ist und das letztere bei bedruckten ersten Abschnittselementen (5,6) nur unter einem bestimmten Betrachtungswinkel des Sicherheitssiegels als ein Informationselement (10) einer dritten nach außen sichtbaren Information entschlüsselt,
**dadurch gekennzeichnet,**
**daß** die ersten Abschnittselemente zum Darstellen einer ersten Information bedruckt werden können; und
die zweite Schicht (3) unlösbar auf der ersten Schicht (1) befestigt wird.

16. Verfahren nach Anspruch 15, bei welchem die zweite Information und damit die spezielle Anordnung der zweiten und dritten Abschnittselemente (8, 9) der zweiten Schicht (3) mittels eines Verschlüsselungsalgorithmus erzeugt wird.

17. Verfahren nach Anspruch 16, bei welchem bei der Verschlüsselung für jedes Sicherheitssiegel individuell ein unterschiedlicher Verschlüsselungsschlüssel verwendet wird.

18. Verfahren nach Anspruch 16, bei welchem bei der Verschlüsselung ein Masterschlüssel für mehrere Sicherheitssiegel verwendet wird.

19. Verfahren nach einem der Ansprüche 15 bis 18, bei welchem die erste Schicht (1) nach dem Auftragen der zweiten Schicht (3) mit den die erste Information darstellenden Abschnittselementen (5, 6) durch die zweite Schicht (3) hindurch mittels eines Laserstrahls bedruckt wird.

## Claims

1. Security seal comprising:
a) a first layer (1) for displaying first information, which is divided into first section elements (5, 6),
b) a second layer (3) which comprises second, transparent section elements (9) and third section elements (8) with light-reflecting, light-absorbing, light-refracting, light-scattering or light-diffracting properties, wherein, in the case of reflecting, absorbing and scattering section elements, a transparent spacer layer (2) is arranged between the first layer (1) and the second layer (3), wherein the second and third section elements are arranged with respect to one another in such a way that together they display second information specific to the security seal,
c) wherein in each case a plurality of first section elements (5, 6) are allocated to information elements (4) which display the first information, and second and third section elements (8, 9) are allocated to information elements (7) which display the second information, and the second and third section elements (8, 9) of each information element of the second information are arranged in such a way that in each case one information element (7) of the second information is a decryption key for its associated information element (4) of the first information and decrypts the latter only under a certain viewing angle of the security seal as an information element (10) of third information which is visible from outside,
**characterized in that**
the first section elements (5, 6) are designed such that they can be printed in order to display the first information; and
the second layer (3) is fixed in a non-detachable manner to the first layer (1).

2. Security seal according to Claim 1, in which the transparent second section elements (9) furthermore exhibit the property that they allow light to pass through essentially unaltered.

3. Security seal according to Claim 1 or 2, in which the second and third section elements (8, 9) are arranged in one plane in the second layer (3).

4. Security seal according to one of the preceding claims, in which in each case one second section element (9) and one third section element (8) together form an information element (7) of the second layer (3), which is associated with an information element (4) of the first layer (1) which is formed of two first section elements (5, 6), wherein the associated information elements (4, 7) of the first and second layers (1, 3) form an information element (10) of the third information which is visible from outside.

5. Security seal according to one of the preceding claims, in which the second layer (3) is arranged over the full surface of on the first layer (1).

6. Security seal according to one of Claims 4 to 5, in which the information elements (4) on the first layer (1) together form a grey pattern under an essentially non-vertical viewing angle, wherein the associated information elements (7) of the second layer (3) are arranged in such a way that the third information becomes visible under an essentially vertical viewing angle.

7. Security seal according to one of the preceding claims, in which the light-refracting third section elements (8) of the second layer (3) are prism elements.

8. Security seal according to one of Claims 1 to 6, in which the light-refracting third section elements (8) of the second layer (3) are lenticular lens elements.

9. Security seal according to one of Claims 1 to 6, in which the light-diffracting third section elements (8) of the second layer (3) are transparent, light-diffracting lattice elements.

10. Security seal according to Claim 9, in which the light-diffracting third section elements (8) of the second layer (3) are furthermore designed in such a way that they generate an externally readable diffraction structure, in particular a hologram, under a certain viewing angle range which is different from the viewing angle range under which the third information becomes visible.

11. Security seal according to one of Claims 7 to 10, in which the prism elements, lenticular lens elements and/or transparent, light-diffracting lattice elements of an information element (7) of the second layer (3) are in each case arranged directly above a first section element (5) of the associated information element (4) of the first layer (1) and are designed in such a way that they deflect the light which impinges vertically on the security seal onto the other section element (6) of the associated information element (4) of the first layer (1).

12. Security seal according to one of Claims 6 to 11, in which the second information of the second layer (3) is generated by means of an encryption algorithm.

13. Security seal according to Claim 12, in which the encryption algorithm uses an individual encryption key for each security seal.

14. Security seal according to Claim 12, in which the encryption algorithm uses a master key for a plurality of security seals.

15. Method for producing a security seal according to one of the preceding claims, in which:
a) a first layer (1) is provided, which is divided into first section elements (5, 6),
b) a second layer (3) is provided, which comprises second section elements (9) with transparent properties and third section elements (8) with light-reflecting, light-absorbing, light-refracting, light-scattering or light-diffracting properties, wherein, in the case of reflecting, absorbing and scattering section elements, a transparent spacer layer (2) is arranged between the first layer (1) and the second layer (3), wherein the second and third section elements are arranged with respect to one another in such a way that together they display second information specific to the security seal,
c) wherein in each case a plurality of first section elements (5, 6) are allocated to information elements (4) which display the first information, and second and third section elements (8, 9) are allocated to information elements (7) which display the second information, and the second and third section elements (8, 9) of each information element of the second information are arranged in such a way that in each case one information element (7) of the second information is a decryption key for its associated information element (4) of the first information and decrypts the latter, in the case of printed first section elements (5, 6), only under a certain viewing angle of the security seal as an information element (10) of third information which is visible from outside,
**characterized in that**
the first section elements can be printed in order to display first information; and
the second layer (3) is fixed in a non-detachable manner to the first layer (1).

16. Method according to Claim 15, in which the second information and thus the special arrangement of the second and third section elements (8, 9) of the second layer (3) is generated by means of an encryption algorithm.

17. Method according to Claim 16, in which a different encryption key is used individually for each security seal in the encryption.

18. Method according to Claim 16, in which a master key is used for a plurality of security seals in the encryption.

19. Method according to one of Claims 15 to 18, in which, following the application of the second layer (3), the first layer (1) is printed with the section elements (5, 6) which display the first information, by means of a laser beam through the second layer (3).

## Revendications

1. Cachet de sécurité comprenant : a) une première couche (1) représentant une première information laquelle est répartie dans des premiers éléments secteurs (5, 6), b) une deuxième couche (3) comportant des deuxièmes éléments secteurs transparents (9) et des troisièmes éléments secteurs (8) avec la propriété de réfléchir, d'absorber, de réfracter, de diffuser ou de diffracter la lumière, une couche de séparation transparente (2) étant disposée entre la première couche (1) et la deuxième couche (3) dans le cas des éléments secteurs avec la propriété de réfléchir, d'absorber et de diffuser, les deuxièmes et troisièmes éléments secteurs étant disposés de telle sorte l'un par rapport à l'autre qu'ils représentent en commun une deuxième information individualisée pour le cachet de sécurité, c) plusieurs premiers éléments secteurs (5, 6) étant répartis dans les éléments informations (4) représentant la première information et des deuxièmes et troisièmes éléments secteurs (8, 9) étant répartis dans les éléments informations (7) représentant la deuxième information, les deuxièmes et troisièmes éléments secteurs (8, 9) de chaque élément information de la deuxième information étant chaque fois disposés de telle sorte que chaque fois un élément information (7) de la deuxième information représente une clé de décryptage pour son élément information (4) correspondant de la première information, ladite clé décryptant ce dernier seulement sous un angle d'observation défini du cachet de sécurité en tant qu'un élément information (10) d'une troisième information visible vers l'extérieur, **caractérisé en ce que** les premiers éléments secteurs (5, 6) peuvent être imprimés pour représenter la première information et que la deuxième couche (3) est fixée à demeure sur la première couche (1).

2. Cachet de sécurité selon la revendication 1, où les deuxièmes éléments secteurs transparents (9) ont par ailleurs la propriété de laisser passer la lumière sans qu'elle ne se modifie essentiellement.

3. Cachet de sécurité selon la revendication 1 ou 2, où les deuxièmes et troisièmes éléments secteurs (8, 9) sont disposés dans la deuxième couche (3) sur un plan.

4. Cachet de sécurité selon l'une quelconque des revendications précédentes, où un deuxième (9) et un troisième (8) élément secteur forment en commun un élément information (7) de la deuxième couche (3), auquel est attribué un élément information (4) de la première couche (1) formé à partir de deux premiers éléments secteurs (5, 6), les éléments informations (4, 7) affectés mutuellement de la première et de la deuxième couche (1, 3) formant un élément information (10) de la troisième information visible vers l'extérieur.

5. Cachet de sécurité selon l'une quelconque des revendications précédentes, où la deuxième couche (3) est disposée de bout en bout sur la première couche (1).

6. Cachet de sécurité selon l'une quelconque des revendications 4 à 5, où les éléments informations (4) sur la première couche (1) représentent ensemble sous un angle d'observation essentiellement non vertical une figure grise, les éléments informations afférents (7) de la deuxième couche (3) étant disposés de telle sorte que sous un angle d'observation essentiellement vertical la troisième information est visible.

7. Cachet de sécurité selon l'une quelconque des revendications précédentes, où les troisièmes éléments secteurs (8) de la deuxième couche (3) qui réfractent la lumière sont des éléments prismatiques.

8. Cachet de sécurité selon l'une quelconque des revendications 1 à 6, où les troisièmes éléments secteurs (8) de la deuxième couche (3) qui réfractent la lumière sont des éléments à lentilles lenticulaires.

9. Cachet de sécurité selon l'une quelconque des revendications 1 à 6, où les troisièmes éléments secteurs (8) de la deuxième couche (3) qui diffractent la lumière sont des éléments grilles transparents diffractant la lumière.

10. Cachet de sécurité selon la revendication 9, où les troisièmes éléments secteurs (8) de la deuxième couche (3) qui diffractent la lumière sont par ailleurs configurés de telle sorte qu'ils produisent une structure diffractée, notamment un hologramme, sous une zone d'angle d'observation déterminée différente de la zone d'angle d'observation sous laquelle la troisième information est visible.

11. Cachet de sécurité selon l'une quelconque des revendications 7 à 10, où les éléments prismatiques, les éléments à lentilles lenticulaires et / ou les éléments à grilles diffractant la lumière et transparents d'un élément information (7) de la deuxième couche (3) sont disposés juste au-dessus d'un premier élément de séparation (5) de l'élément information afférent (4) de la première couche (1) et configurés de telle sorte qu'ils dévient la lumière tombant verticalement sur le cachet de sécurité sur l'autre élément secteur (6) de l'élément information (4) correspondant de la première couche (1).

12. Cachet de sécurité selon l'une quelconque des revendications 6 à 11, où la deuxième information de la deuxième couche (3) est générée à l'aide d'un algorithme de cryptage.

13. Cachet de sécurité selon la revendication 12, où l'algorithme de cryptage pour chaque cachet de sécurité utilise une clé individuelle de cryptage.

14. Cachet de sécurité selon la revendication 12 où l'algorithme de cryptage utilise une clé maître pour plusieurs cachets de sécurité.

15. Procédé de fabrication d'un cachet de sécurité selon l'une quelconque des revendications précédentes, où : a) une première couche (1) est mise à disposition et répartie dans des premiers éléments secteurs (5, 6), b) une deuxième couche (3) est mise à disposition comportant des deuxièmes éléments secteurs à propriété transparente (9) et des troisièmes éléments secteurs (8) avec la propriété de réfléchir, d'absorber, de réfracter, de diffuser ou de diffracter la lumière, une couche de séparation transparente (2) étant disposée entre la première couche (1) et la deuxième couche (3) dans le cas des éléments secteurs avec la propriété de réfléchir, d'absorber et de diffuser, les deuxièmes et troisièmes éléments secteurs étant disposés de telle sorte l'un par rapport à l'autre qu'ils représentent en commun une deuxième information individualisée pour le cachet de sécurité, c) plusieurs premiers éléments secteurs (5, 6) étant répartis dans les éléments informations (4) représentant la première information et des deuxièmes et troisièmes éléments secteurs (8, 9) étant répartis dans les éléments informations (7) représentant la deuxième information, les deuxièmes et troisièmes éléments secteurs (8, 9) de chaque élément information de la deuxième information étant chaque fois disposés de telle sorte que chaque fois un élément information (7) de la deuxième information représente une clé de décryptage pour son élément information (4) correspondant de la première information, ladite clé décryptant ce dernier, pour des premiers éléments secteurs imprimés (5, 6), seulement sous un angle d'observation défini du cachet de sécurité en tant qu'un élément information (10) d'une troisième information visible vers l'extérieur, **caractérisé en ce que** les premiers éléments secteurs peuvent être imprimés pour représenter une première information et que la deuxième couche (3) est fixée à demeure sur la première couche (1).

16. Procédé selon la revendication 15, où la deuxième information et donc la disposition particulière des deuxièmes et troisièmes éléments secteurs (8, 9) de la deuxième couche (3) est générée à l'aide d'un algorithme de cryptage.

17. Procédé selon la revendication 16, où l'on utilise lors du cryptage individuellement pour chaque cachet de sécurité une différente clé de cryptage.

18. Procédé selon la revendication 16, où l'on utilise lors du cryptage une clé maître pour plusieurs cachets de sécurités.

19. Procédé selon l'une quelconque des revendications 15 à 18, où la première couche (1), suite à l'application de la deuxième couche (3), est imprimée à l'aide d'un faisceau laser à travers la deuxième couche (3) avec les éléments secteurs (5, 6) représentant la première information.
